# EUROPÄISCHE PATENTSCHRIFT

(11) **EP 2 381 146 B1**
(45) Veröffentlichungstag und Bekanntmachung des Hinweises auf die Patenterteilung: **01.01.2014**
(21) Anmeldenummer: 11158901.6
(22) Anmeldetag: 18.03.2011
(51) Int. Cl.: F16K 11/044, F16K 39/02

(54) **Ventil**
Valve
Soupape

(30) Priorität: 23.03.2010 DE 102010012413
(43) Veröffentlichungstag der Anmeldung: 26.10.2011
(73) Patentinhaber: Gudzulic, Miro, 83512 Wasserburg (DE)
(72) Erfinder: Gudzulic, Miro, 83512 Wasserburg (DE)
(74) Vertreter: Hofstetter, Schurack & Partner

(56) Entgegenhaltungen:
- EP-A1- 1 442 903
- EP-A2- 0 380 754
- WO-A2-2007/118674
- DE-A1- 4 327 764

## Beschreibung

Die Erfindung betrifft ein Ventil, insbesondere für eine Luftfederungsanlage eines Kraftwagens, gemäß dem Oberbegriff von Patentanspruch 1.

Solche Ventile sind dem Stand der Technik als allgemein bekannt zu entnehmen. Luftfederungsanlagen finden zunehmend Anwendung in der Fahrwerkstechnik, da bei derartigen Federungen sowohl die Federhärte als auch das Fahrzeugniveau nach Wunsch einstellbar sind. Luftfederungsanlagen finden beispielsweise in Bussen Anwendung, um ein Absenken des Busses beim Ein- und Aussteigen der Fahrgäste zu ermöglichen. Auch bei Lastkraftwagen werden vielfach Luftfederungsanlagen verwendet, um die Federung an die jeweilige Ladungsmasse des Kraftwagens anpassen zu können.

Um die einzelnen Luftfedern einer Luftfederungsanlage kontrollieren zu können, ist eine Mehrzahl von Ventilen notwendig. Es werden hierbei sowohl 2/2-Wegventile als auch 3/2-Wegventile verwendet, um eine kontrollierte Luftzuführung bzw. Luftentnahme aus dem Luftfedern zu ermöglichen.

Aus Bauraum- und Kostengründen ist es wünschenswert, solche Ventile so kompakt und einfach konstruiert wie möglich aufzubauen. Zudem müssen solche Ventile oft über relativ große Druckdifferenzen, beispielsweise zwischen einem Federinnendruck von mehr als 10 bar und einem Umgebungsdruck von 1 bar, schalten. Es ist daher weiterhin wünschenswert, die Schaltkräfte solcher Ventile zu minimieren, um große und stark energieverbrauchende Ventilantriebe vermeiden zu können.

Ein solches Ventil ist bereits aus der EP 0380754 A2 bekannt. Dabei ist ein doppeltwirkender Kolben in einem Arbeitsraum eines Gehäuses mit wenigstens zwei Anschlussöffnungen aufgenommen und teilt den Arbeitsraum in zwei Teilräume auf. Die erste und die zweite Anschlussöffnung sind in einer ersten Schaltstellung des Kolbens fluidisch getrennt und in einer zweiten Schaltstellung des Kolbens fluidisch gekoppelt. Der Kolben ist dabei mittels eines elektromagnetischen Aktuators von der ersten in die zweite Schaltstellung zu verbringen.

Der vorliegenden Erfindung liegt somit die Aufgabe zugrunde, ein Ventil der eingangs genannten Art bereitzustellen, welches universal schaltbar ist.

Diese Aufgabe wird durch ein Ventil mit den Merkmalen des Patentanspruchs 1 gelöst.

Um ein Ventil zu schaffen, welches universal einerseits durch elektrische Energie und andererseits pneumatisch schaltbar ist, umfasst dieses erfindungsgemäß einen pneumatischen Steuereingang, wobei der Kolben zusätzlich durch Anlegen eines Steuerdrucks am Steuereingang pneumatisch betätigbar ist.

Durch den Druckausgleich wird in der zweiten Schaltstellung eine Nettokraft auf den Kolben ausgeübt, welche diesen Aktuator unterstützt, so dass der Aktuator besonders klein, leicht und energiesparend gestaltet werden kann.

Steht dabei keine elektrische Energie zum elektromagnetischen Betätigen des Ventils zur Verfügung, so kann dieses über die Steueröffnung bzw. den Steuereingang mit Druckluft beaufschlagt werden. Hierdurch wird der Kolben entsprechend betätigt. Dies ermöglicht die Betätigung des Ventils auch in einem Ruhezustand des Kraftwagens, in welchem keine elektrische Versorgung zur Betätigung des elektromagnetischen Aktuators zur Verfügung steht. In einem solchen Ruhezustand des Kraftwagens kann die Ventilbetätigung dann durch Anlegen von Druck aus einem Druckluftreservoir des Kraftwagens mittels handbetätigter Ventile an die Steueröffnung erfolgen.

In weiterer Ausgestaltung der Erfindung weist das Gehäuse eine dritte Anschlussöffnung auf, wobei in der ersten Schaltstellung des Kolbens die zweite und dritte Anschlussöffnung fluidisch gekoppelt und in der zweiten Schaltstellung des Kolbens die zweite und dritte Anschlussöffnung fluidisch getrennt sind. Mit anderen Worten ist in dieser Ausführungsform das Ventil als 3/2-Wegeventil ausgebildet.

Vorzugsweise weist der Kolben einen Kolbenschaft sowie zwei Kolbenteller auf, wobei der erste Kolbenteller wenigstens ein Dichtelement zum Abdichten des Kolbentellers gegen einen Ventilsitz aufweist. Ein solcher Kolben ist sowohl für 2/2- als auch für 3/2-Wegeventile geeignet, so dass auf einfache Art unterschiedliche Ventiltypen realisiert werden können, ohne dass eine Vielzahl von Bauteilen ausgetauscht werden müssen.

Im Folgenden soll die Erfindung und die Ausführungsformen anhand der Zeichnung näher erläutert werden. Hierbei zeigen:
- Fig. 1: eine Schnittdarstellung eines Ausführungsbeispiels eines erfindungsgemäßen 2/2-Wegeventils in geschlossener Stellung,
- Fig. 2: eine Schnittdarstellung des 2/2-Wegeventils gemäß Fig. 1 in geöffneter Stellung,
- Fig. 3: eine Schnittdarstellung durch ein Ausführungsbeispiel eines erfindungsgemäßen 3/2-Wegeventils in einer ersten Schaltstellung,
- Fig. 4: das 3/2-Wegeventil gemäß Fig. 3 in einer zweiten Schaltstellung, und
- Fig. 5: einen pneumatischen Schaltplan für ein Ausführungsbeispiel einer Luftfederungsanlage unter Verwendung von Ventilen gemäß den Fig. 1 bis 4.
- Fig. 6: eine Schnittdarstellung durch ein alternatives Ausführungsbeispiel eines erfindungsgemäßen 2/2-Wegeventils mit zusätzlicher manueller pneumatischer Betätigung und
- Fig. 7: einen pneumatischen Schaltplan für ein Ausführungsbeispiel einer Luftfederungsanlage zur manuellen Betätigung unter Verwendung eines Ventils gemäß Fig. 6.

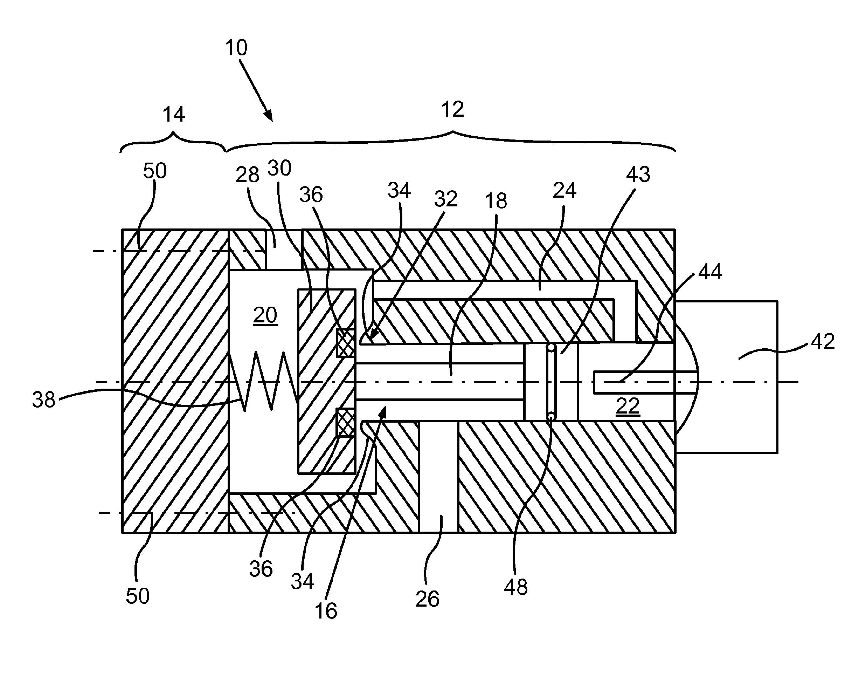

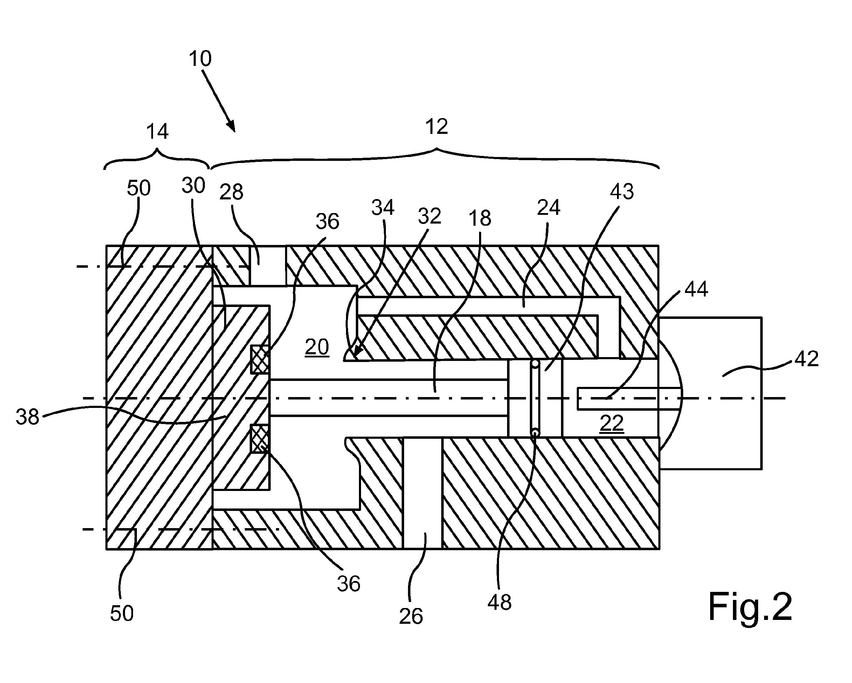

Fig. 1 und 2 zeigen ein insgesamt mit 10 bezeichnetes 2/2-Wegeventil. Das Ventil 10 umfasst einen Grundkörper 12 sowie einen Deckel 14. Im Grundkörper 12 ist ein Aufnahmeraum 16 ausgebildet, in welchem ein doppeltwirkender Kolben 18 aufgenommen ist. Der Kolben 18 teilt den Aufnahmeraum 16 in zwei Teilräume 20, 22 auf. Die Teilräume 20, 22 sind durch eine Druckausgleichsleitung 24 miteinander verbunden. Mit dem Aufnahmeraum 16 sind eine erste Anschlussöffnung 26 und eine zweite Anschlussöffnung 28 verbunden.

In Fig. 1 ist das Ventil in seiner Schließstellung dargestellt. Der Kolben 18 liegt mit einem Kolbenteller 30 in dieser Stellung in einem ersten Ventilsitz 32 an. Fortsätze 34 des Ventilsitzes 32 stehen in Kontakt mit Dichtelementen 36 des Kolbentellers 30, wodurch die Anschlussöffnungen 26, 28 fluidisch entkoppelt sind. Das Ventil 10 ist also geschlossen. Eine Rückstellfeder 38 ist in dieser Schaltstellung vollständig expandiert, ein Schaltstift 44 einer elektromagnetischen Betätigungseinrichtung 42 ist voll eingefahren und steht nicht in Kontakt mit dem zweiten Kolbenteller 43 des Kolbens 18. Auf die Kolbenteller 30, 43 wirken aufgrund der Druckausgleichsleitung entgegengesetzt gleiche Kräfte, so dass der Kolben 18 insgesamt kraftfrei ist.

Um das Ventil 10 in seine in Fig. 2 geöffnete Öffnungsstellung zu überführen, wird durch den elektromagnetischen Aktuator 42 der Schaltstift 44 auf den Kolben 18 hin ausgefahren, so dass der Kolben 18 sich vom Ventilsitz 32 weg bewegt, bis der Kolbenteller 30 schließlich in Anlage an die Wand 46 des Deckels 14 kommt. Die Rückstellfeder 38 wird hierbei vollständig komprimiert, der Kolben 18 muss durch den Aktuator 42 aktiv in dieser Position gehalten werden.

In dieser Schaltstellung ist der Weg zwischen den Anschlussöffnungen 26, 28 freigegeben, so dass ein Fluid zwischen den Öffnungen und damit durch das Ventil strömen kann. Aufgrund der Druckausgleichsleitung 24 übt das strömende Fluid eine Nettokraft auf den Kolben 18 aus, die mit der vom Aktuator 42 ausgeübten Kraft gleichgerichtet ist und den Aktuator 42 daher unterstützt. Bei einem Ausfall der Stromversorgung des Aktuators 42 gewinnt die Federkraft der Rückstellfeder 38 die Überhand, so dass das Ventil 10 selbsttätig schließt.

Um ein Überströmen von Gas zwischen den Teilräumen 20, 22 zu verhindern, weist der Kolbenteller 43 des Kolbens 18 einen Dichtungsring 48 auf, der die Teilräume 20, 22 gegeneinander abdichtet.

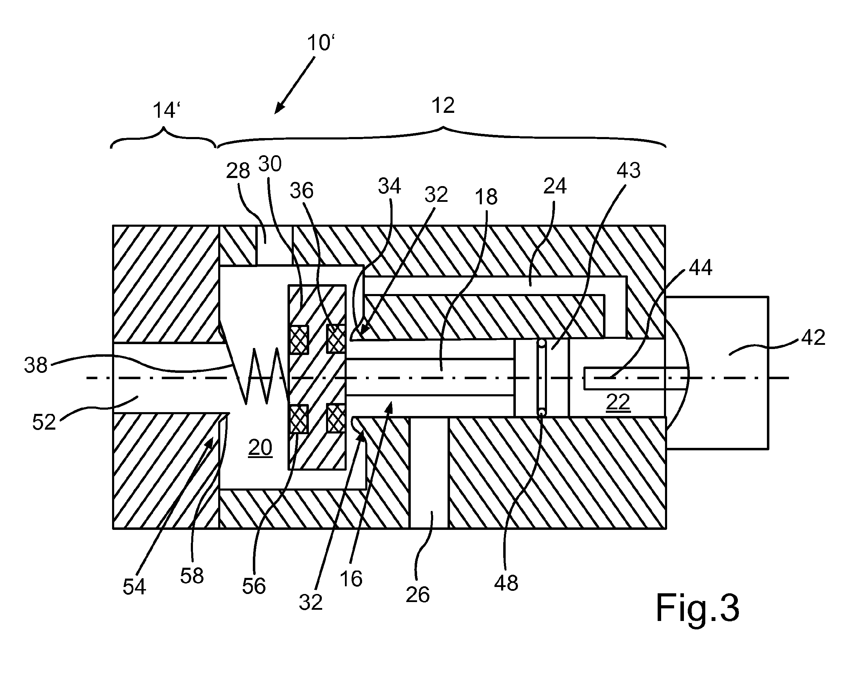

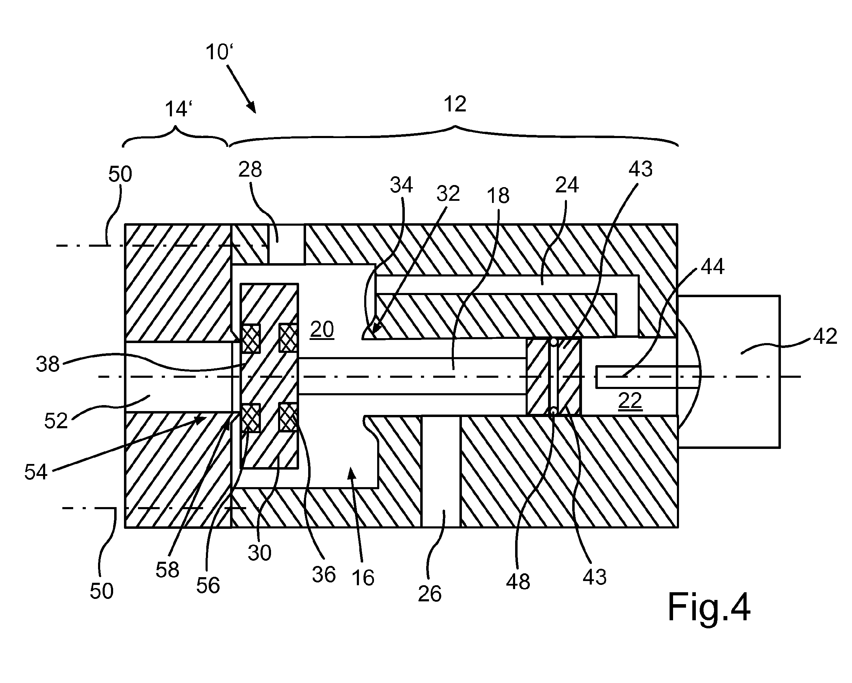

Der Teilraum 20 wird durch den Deckel 14 des Ventils 10 abgeschlossen. Der Deckel 14 ist dabei nicht fest mit dem Grundkörper 12 des Ventils 10 verbunden, sondern kann beispielsweise entlang der Achsen 50 mit dem Ventilkörper 12 verschraubt sein. Dies ermöglicht auf einfachste Art eine Modifikation des Ventils 10, wie in den Fig. 3 und 4 dargestellt. Durch Austausch des Deckels 14 gegen einen alternativen Deckel 14' kann anstelle eines 2/2-Wegeventils ein 3/2-Wegeventil 10' geschaffen werden. Im Gegensatz zum Deckel 14 weist der Deckel 14' eine weitere Anschlussöffnung 52 auf. Diese mündet in den Teilraum 20 des Aufnahmeraums 16 und ist über einen zweiten Ventilsitz 54 gegen diesen abgegrenzt.

Fig. 3 zeigt das Ventil 10' in einer ersten Schaltstellung. In dieser Schaltstellung liegt der Kolbenteller 30 des Kolbens 18 am ersten Ventilsitz 32 an, so dass die Fortsätze 34 des ersten Ventilsitzes 32 gegen die Dichtelemente 36 des Ventiltellers 30 angepresst sind. Die Verbindung zwischen den Anschlussöffnungen 26 und 28 ist in dieser Schaltstellung unterbrochen, dagegen sind die Anschlussöffnungen 28 und 52 fluidisch gekoppelt. Auch hier ist eine Rückstellfeder 38 voll expandiert, der Schaltstift 44 des Aktuators 42 steht nicht in Kontakt mit dem Kolbenteller 43 des Kolbens 18. Auch hier sorgt die Druckausgleichsleitung 24 wie geschildert für einen kraftfreien Zustand des Kolbens.

Durch Ausfahren des Betätigungsstiftes 44 des Aktuators 42, bis dieser in Kontakt mit dem Ventilteller 43 des Kolbens 18 kommt, wird der Kolben 18 auf den zweiten Ventilsitz 54 hin verschoben, bis weitere Dichtelemente 56 des Kolbentellers 30 in Anlage an Fortsätze 58 des zweiten Ventilsitzes 54 gelangen. Hierdurch wird die Anschlussöffnung 52 abgedichtet, in der in Fig. 4 dargestellten Schaltstellung besteht dagegen eine fluidische Kopplung zwischen den Anschlussöffnungen 26 und 28. Die Rückstellfeder 38 ist hier vol komprimiert. Besteht ein Druckunterschied zwischen der Anschlussöffnung 52 und dem Teilraum 20 so wirkt in dieser Schaltstellung eine Nettokraft auf den Kolben 18. Üblicherweise wird die Anschlussöffnung 52 als Entlüftungsöffnung eingesetzt, so dass im Teilraum 22 ein höherer Druck herrscht als auf Seiten der Anschlussöffnung 52. Der Druck im Teilraum 22 übt eine Kraft auf den Kolbenteller 43, die im geschilderten Fall größer ist als die auf Seiten der Anschlussöffnung 52 auf den Kolbenteller 30 wirkende Kraft. Die Druckdifferenz unterstützt also den Aktuator 42 beim Halten des Kolbens 18 in der in Fig. 4 gezeigten Schaltstellung, so dass besonders wenig Energie von Seiten des Aktuators 42 ausgeübt werden muss.

Die gezeigten Ventile 10, 10' sind also modular aufgebaut, wobei sich 2/2-und 3/2-Wegeventile im Wesentlichen nur durch die Ausgestaltung der Deckel 14, 14' unterscheiden. Im gezeigten Ausführungsbeispiel unterscheidet sich auch der Ventilteller 30 des Kolbens 18, der beim 3/2-Wegeventil ein zusätzliches Dichtelement 56 aufweist. Dieser Unterschied ist jedoch nicht zwingend, die in den Fig. 3 und 4 gezeigte Ausführung des Kolbentellers 30 kann auch bei einem 2/2-Wegeventil Anwendung finden, so dass die Unterschiede zwischen beiden Ventiltypen weiter verringert werden und die Herstellung besonders kostengünstig ist. Auch der Deckel 14' kann einfach entlang der Achsen 50 mit dem Grundköper 12 verschraubt werden, so dass das gleiche Ventil lediglich durch Austausch des Deckels 14, 14' von einem 2/2-Wegeventil in eine 3/2-Wegeventil und umgekehrt umgewandet werden kann.

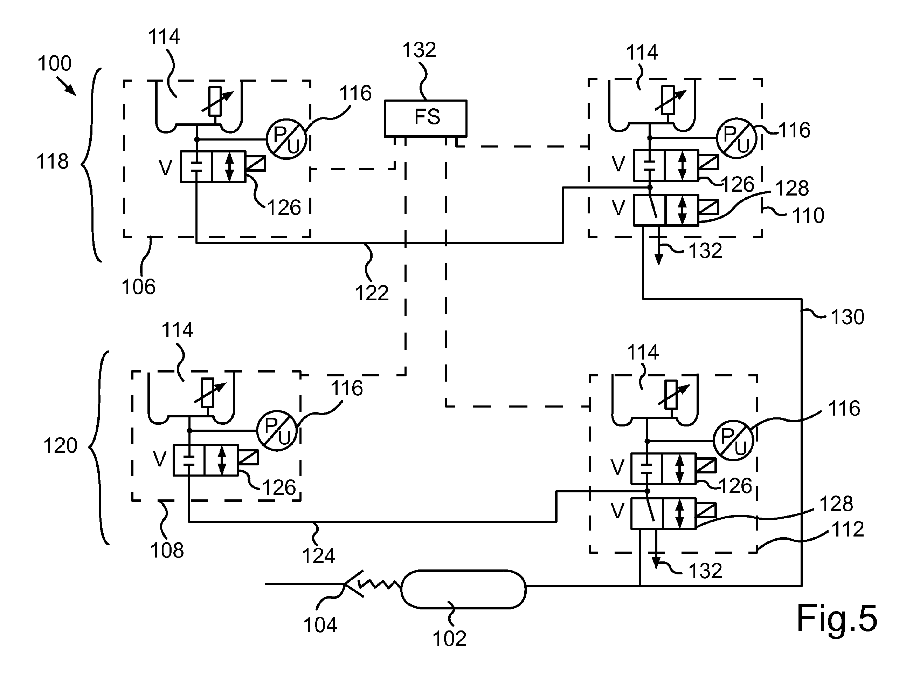

Fig. 5 zeigt schließlich eine Luftfederungsanlage für einen Kraftwagen in schematischer Schaltbilddarstellung, die mit den geschilderten Ventilen realisiert werden kann. Die insgesamt mit 100 bezeichnete Luftfederungsanlage weist einen Druckspeicher 102 auf, welcher über ein Rückschlagventil 104 mit der Umwelt verbunden ist. Jedem Rad des Kraftwagens ist eine Luftfedereinheit 106, 108, 110, 112 zugeordnet. Die Luftfedereinheiten 106 bis 112 umfassen jeweilige Luftfedern 114, die direkt mit zugeordneten Druckmessgeräten 116 gekoppelt sind. Für jeweils eine Fahrzeugseite 118, 120 sind die jeweiligen Luftfedereinheiten der auf dieser Fahrzeugseite angeordneten Räder über eine gemeinsame Druckleitung 122, 124 verbunden. Zwischen den Druckleitungen 122 und 124 und den jeweiligen Luftfedern 114 der zugeordneten Luftfedereinheiten ist dabei jeweils ein 2/2-Wegeventil 126 vorgesehen. Über die 2/2-Wegeventile 126 können die Luftfedern 114 also mit den Druckleitungen 122 und 124 verbunden bzw. von diesen entkoppelt werden.

Um eine Beaufschlagung der Luftfedern 114 mit Luft auf dem Reservoir 102 bzw. eine Druckentlastung der Luftfedern 116 durch Abgabe von Luft an die Umwelt zu ermöglichen, ist jeder Druckleitung 122, 124 ein jeweiliges 3/2-Wegeventil 128 zugeordnet. Über die 3/2-Wegeventile 128 können die Druckleitungen 122, 124 mit einer gemeinsamen Druckleitung 130 verbunden werden, die in das Reservoir 102 mündet. In einer zweiten Schaltstellung der 3/2-Wegeventile 128 können die Druckleitungen 122, 124 mit einer Auslassöffnung 132 verbunden werden, die in die Umwelt mündet.

Die gezeigte Luftfederanlage ermöglicht eine unabhängige Steuerung der Luftfedern der beiden Fahrzeugseiten 118, 120. Die Steuerung erfolgt dabei über eine zentrale Steuereinheit 132, die die Messwerte der Druckmessgeräte 116 annimmt und die Ventile 126, 128 steuert. Soll beispielsweise nur die rechte Fahrzeugseite 118 abgesenkt werden, so wird das der Druckleitung 122 zugeordnete 3/2-Wegeventil 128 so geschaltet, dass Druck aus der Druckleitung 122 über die Öffnung 132 an die Umwelt abgegeben werden kann. Die 2/2-Wegeventile 126 der beiden Luftfedereinheiten 106, 110 der rechten Fahrzeugseite werden in ihre Öffnungsstelle verbracht, so dass aus den jeweiligen Druckfedern 114 der rechten Fahrzeugseite 118 Luft an die Umwelt austreten kann.

Um die rechte Fahrzeugseite 118 anzuheben, wird das der Druckleitung 122 zugeordnete 3/2-Wegeventil 128 so geschaltet, dass die Druckleitung 123 mit der Druckleitung 130 und damit mit dem Reservoir 102 verbunden wird. Durch Öffnen der 2/2-Wegeventile 126 der Luftfedereinheiten 106, 110 kann Luft aus dem Reservoir 102 in die Luftfedern 114 der Luftfedereinheiten 106, 110 der rechten Fahrzeugseite 118 strömen.

Genauso ist eine unabhängige Druckentlassung bzw. Druckbeaufschlagung der linken Fahrzeugseite 120 möglich. Soll die linke Fahrzeugseite 120 druckentlastet werden, so wird das der Druckleitung 124 zugeordnete 3/2-Wegeventil 128 so geschaltet, dass die Druckleitung 124 mit der Öffnung 132 der linken Fahrzeugseite 120, und damit mit der Umwelt verbunden ist. Durch Öffnen der 2/2-Wegeventile 126 der Luftfedereinheiten 108, 112 der linken Fahrzeugseite 120 kann Luft aus den Luftfedern 114 der Luftfedereinheiten 106, 112 der linken Fahrzeugseite 120 durch die Druckleitung 124 und das 3/2-Wegeventil 128 in die Umwelt austreten, während die rechte Fahrzeugseite 118 unbeeinflusst bleibt.

Durch Umschalten des 3/2-Wegeventils 128, welches mit der Druckleitung 124 verbunden ist, kann die Druckleitung 124 mit der Druckleitung 130 und damit mit dem Reservoir 102 verbunden werden. Werden nun die 2/2-Wegeventile 126 der Luftfedereinheiten 108, 112 geöffnet, so kann Luft in die Luftfedern 114 der Luftfedereinheiten 108, 112 der linken Fahrzeugseite 120 strömen, so dass diese Seite unabhängig von der rechten Fahrzeugsseite 118 angehoben wird.

Die in Fig. 5 dargestellte Luftfederungsanlage 100 ermöglicht somit eine unabhängige Niveauregulierung der Fahrzeugseiten 118, 120. Dies kann beispielsweise als Einstiegshilfe für Busse oder dergleichen genutzt werden, indem die Fahrzeugseite, auf der das Ein- und Aussteigen der Passagiere erfolgen soll, mittels der Luftfederungsanlage 100 abgesenkt wird.

Wird eine Luftfederungsanlage 100 mit entsprechend schneller Reaktionszeit verwendet, so kann die Luftfederungsanlage 100 auch dynamisch im Fahrbetrieb zum Balancieren der Fahrwerkskräfte verwendet werden. Dies kann beispielsweise bei Tanklastzügen Anwendung finden, bei denen in der Kurvenfahrt die flüssige Ladung aufgrund der Fliehkräfte verschoben wird. Durch selektives Be- und Entlüften der Luftfedern 114 einer Fahrzeugsseite 118, 120 kann dieser Ladungsverschiebung entgegengewirkt werden, um eine stabile Kurvenfahrt zu sichern. Dies kann auch bei Tiertransporten oder dergleichen Anwendung finden, bei welchen aufgrund der Bewegung der Tiere sich die Ladungsverteilung ändern kann. Durch die Drucksensoren 116 kann die Steuereinheit 132 solche Ladungsverschiebungen erkennen und entsprechend die Federung anpassen.

Für die Ventile 126, 128 finden vorzugsweise die in Fig. 1 bis 4 gezeigten 2/2- und 3/2-Wegeventile Anwendung, so dass eine solche Luftfederungsanlage 100 besonders einfach herzustellen ist.

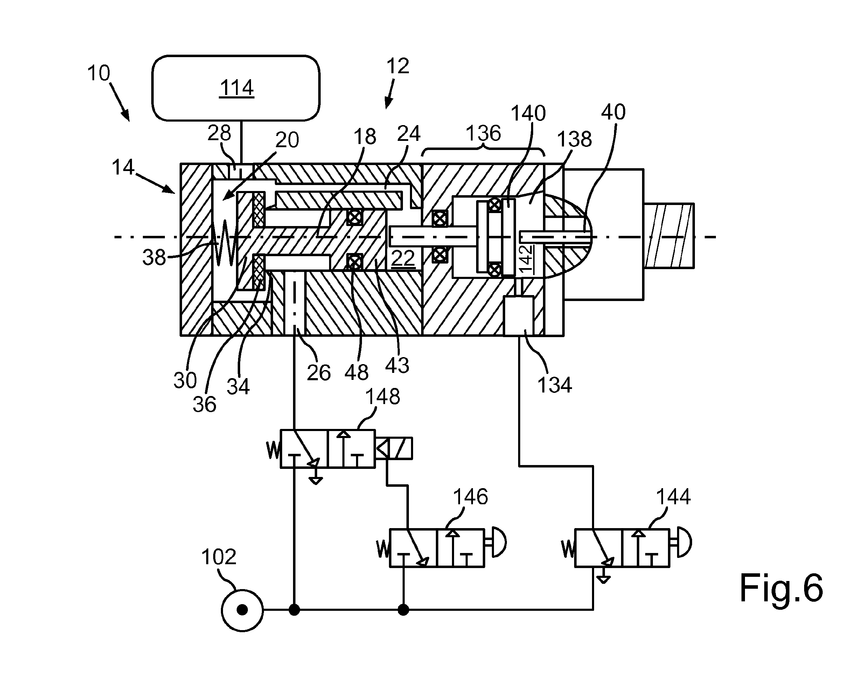

Das in Fig. 6 dargestellte 2/2-Wegeventil unterscheidet sich von den in den Figuren 1 und 2 dargestellten 2/2-Wegeventilen 10 lediglich durch ein Zwischenstück 136, welches zwischen einem Grundkörper 12 des Ventils 10 und dem elektromagnetischen Aktuator 42 angeordnet ist. Im Gegensatz zur Ausführungsform gemäß den Fig. 1 und 2 wird eine Betätigungskraft des Schaltstiftes 40 der Betätigungseinrichtung 42 hier nicht unmittelbar auf den Kolben 18 des Ventils 10 übertragen, sondern über einen weiteren Kolben 140, der in einem Aufnahmeraum 138 des Zwischenstückes 136 aufgenommen ist. Steht keine elektrische Energie zum elektromagnetischen Betätigen des Ventils 10 zur Verfügung, so kann ein Teilraum 142 des Aufnahmeraums 138 über eine Steueröffnung 134 mit Druckluft beaufschlagt werden. Hierdurch bewegt sich der Kolben 140 des Zwischenstückes 136 auf den Kolben 118 des Ventils 10 zu und betätigt diesen in der gewünschten Weise. Das Zwischenstück 136 ermöglicht also eine Betätigung des Ventils 10 auch in einem Ruhezustand des Kraftwagens. Soll das Ventil 10 rein pneumatisch geschaltet werden, so wird im Aufnahmeraum 138 über ein handbetätigtes Ventil 144 Druckluft zugeführt. Der Kolben 140 des Zwischenstückes 136 bewegt sich dann auf den Grundkörper 12 zu verschiebt den Kolben 18 des Ventils 10 gegen die Rückstellfeder 38, wodurch die Verbindung zwischen den Anschlussöffnungen 26, 28 hergestellt wird. Befindet sich hierbei ein weiteres, mit dem Druckluftreservoir 102 gekoppeltes Ventil 146 in der dargestellten Position, so ist ein drittes, ebenfalls pneumatisch betätigtes Ventil 148 zur Umgebung hin geöffnet. Aus der Luftfedereinheit 114 kann dann Luft durch das Ventil 10 an die Umgebung ausströmen, wodurch sich die Luftfedereinheit 114 senkt. Wird über das Ventil 144 eine Druckbeaufschlagung des Aufnahmeraums 138 durchgeführt, während das Ziel 146 mit dem Druckluftreservoir 102 verbunden ist, so wird das Ventil 148 pneumatisch auf Durchgang geschaltet und verbindet die Anschlussöffnung 26 ebenfalls mit dem Druckluftreservoir 102 durch das bei Betätigung des Ventils 144 geöffnete Ventil 10 kann dann Luft aus dem Druckluftreservoir 102 in die Luftfedereinheit 114 strömen, so dass diese angehoben wird.

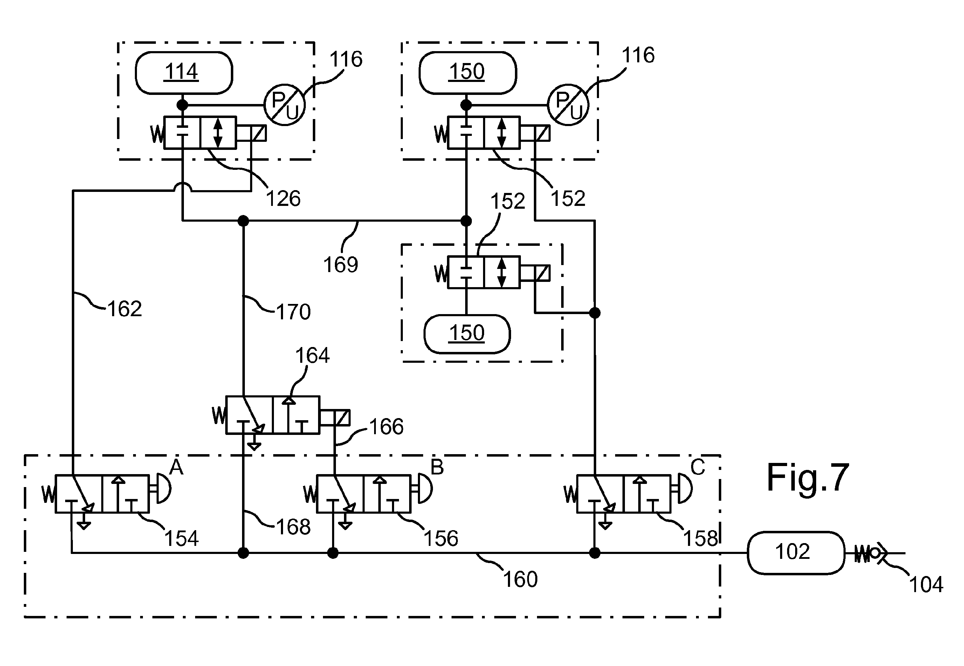

Fig. 7 zeigt schließlich die pneumatische Beschaltung eines Luftfederbalges 114 sowie einer Liftachse 150 mit solchen, zusätzlich pneumatisch betätigbaren Ventilen 126, 152. Dem Luftfederbalg 114 ist dabei das Ventil 126 zugeordnet, den Luftfederbälgen der Liftachse 150 die Ventile 152. Alle Luftfederbälge sind wiederum mit Druck- und Höhensensoren 116 versehen. Zum manuellen Steuern des Luftfederbalges 114 und der Liftachse 150 dienen drei Ventile 154, 156 und 158, die manuell betätigbar sind und über eine Leitung 160 mit dem Druckluftreservoir 102 in Verbindung stehen. Zum Absenken des Luftfederbalges 114 wird nun das Ziel 154 manuell betätigt, wodurch die pneumatische Steuereinrichtung des Ventils 126 über die Leitung 162 mit Druck beaufschlagt wird. Das Ventil 126 öffnet, wodurch Luft aus dem Luftfederbalg 114 über ein weiteres Ventil 164, welches sich in seiner Grundstellung befindet, an die Umgebung ausströmen kann. Soll der Luftfederbalg 114 gehoben werden, so wird zusätzlich das Ventil 156 manuell betätigt. Über die Leitung 166 wird dann die pneumatische Steuereinrichtung des Ventils 164 mit Druck beaufschlagt, das Ventil 164 schaltet um und verbindet das geöffnete Ventil 126 und damit den Luftfederbalg 114 über die Leitung 168 mit der Leitung 160 und damit mit dem Druckluftreservoir 102.

Zum Absenken der Liftachse 150 wird das Ventil 158 manuell betätigt, wodurch die pneumatischen Betätigungseinrichtungen der Ventile 152 der Liftachse 150 mit dem Druckluftreservoir 102 verbunden und dadurch geöffnet werden. Das Ventil 164 befindet sich wieder in seinem Grundzustand, da das Ventil 156 nicht betätigt ist. Aus den Luftfederbälgen der Liftachse 150 kann nun Druckluft über die Leitung 168 und 170 durch das Ventil 164 an die Umwelt ausströmen. Soll die Liftachse 150 angehoben werden, wird wiederum zusätzlich das Ventil 156 betätigt, wodurch das Ventil 164 die Leitungen 168 und 170 verbindet. Nun kann aus dem Druckluftreservoir 102 über die Leitungen 160, 168, 170, 169 sowie über die Ventile 152 in die Luftfederbälge der Liftachse 150 einströmen, wodurch diese behoben wird.

## Patentansprüche

1. Ventil (10, 10'), insbesondere für eine Luftfederungsanlage (100) eines Kraftwagens, mit einem doppeltwirkenden Kolben (18, 118), welcher in einem Arbeitsraum (16) eines Gehäuses (12) mit wenigstens zwei Anschlussöffnungen (26, 28, 52) aufgenommen ist und welcher den Arbeitsraum (16) in zwei Teilräume (20, 22) aufteilt, wobei die erste Anschlussöffnung (26) und zweite Anschlussöffnung (28) in einer ersten Schaltstellung des Kolbens (18, 118) fluidisch getrennt und in einer zweiten Schaltstellung des Kolbens (18, 118) fluidisch gekoppelt sind, wobei die Teilräume (20, 22) durch eine Druckausgleichsleitung (24) in dem Gehäuse (12) unabhängig von einer Schaltstellung des Ventils (10, 10') verbunden sind, und wobei das Ventil (10, 10') einen elektromagnetischen Aktuator (42) zum Verbringen des Kolbens (18, 118) von der ersten in die zweite Schaltstellung umfasst,
**dadurch gekennzeichnet, dass**
das Ventil (10, 10') einen pneumatischen Steuereingang (134) umfasst, wobei der Kolben (18, 118) zusätzlich durch Anlegen eines Steuerdrucks am Steuereingang (134) pneumatisch betätigbar ist.

2. Ventil (10, 10') nach Anspruch 1,
**dadurch gekennzeichnet, dass**
das Ventil (10, 10') eine dritte Anschlussöffnung (52) aufweist, wobei in der ersten Schaltstellung des Kolbens (18) die zweite (28) und dritte Anschlussöffnung (52) fluidisch gekoppelt und in der zweiten Schaltstellung des Kolbens (18) die zweite (28) und dritte Anschlussöffnung (52) fluidisch getrennt sind.

3. Ventil (10, 10') nach Anspruch 1 oder 2,
**dadurch gekennzeichnet, dass**
der Kolben (18) einen Kolbenschaft sowie zwei Kolbenteller (30, 43) umfasst, wobei der erste Kolbenteller (30) wenigstens ein Dichtelement (36, 56) zum Abdichten des Kolbentellers (30) gegen einen Ventilsitz (32, 54) aufweist.

4. Ventil (10, 10') nach einem der Ansprüche 1 bis 3,
**dadurch gekennzeichnet, dass**
das Ventil (10, 10') eine Rückstellfeder (38) zum Verbringen des Kolbens (18) von der zweiten in die erste Schaltstellung umfasst.

5. Ventil (10, 10') nach einem der Ansprüche 1 bis 4
**dadurch gekennzeichnet, dass**
der Aktuator (42) durch Anlegen des Steuerdrucks am Steuereingang (134) pneumatisch betätigbar ist.

## Claims

1. Valve (10, 10'), in particular for a pneumatic suspension system (100) of a motor vehicle, with a double-acting piston (18, 118) which is received in an operating chamber (16) of a housing (12) with at least two attachment openings (26, 28, 52) and which divides the operating chamber (16) into two sub-chambers (20, 22), the first attachment opening (26) and the second attachment opening (28) being fluidically separated in a first switch position of the piston (18, 118) and fluidically linked in a second switch position of the piston (18, 118), the sub-chambers (20, 22) being connected by a pressure equalisation line (24) in the housing (12) irrespective of the switch position of the valve (10, 10'), and the valve (10, 10') comprising an electromagnetic actuator (42) to displace the piston (18, 118) from the first switch position to the second switch position,
**characterised in that**
the valve (10, 10') comprises a pneumatic control input (134), it also being possible to actuate the piston (18, 118) pneumatically by additionally applying control pressure to the control input (134).

2. Valve (10, 10') according to claim 1,
**characterised in that**
the valve (10, 10') has a third attachment opening (52), the second attachment opening (28) and the third attachment opening (52) being fluidically linked in the first switch position of the piston (18), and the second attachment opening (28) and the third attachment opening (52) being fluidically separated in the second switch position of the piston (18).

3. Valve (10, 10') according to either claim 1 or claim 2,
**characterised in that**
the piston (18) comprises a piston shaft and two piston plates (30, 43), the first piston plate (30) having at least one sealing member (36, 56) for sealing the piston plate (30) against a valve seat.

4. Valve (10, 10') according to any one of claims 1 to 3,
**characterised in that**
the valve (10, 10') comprises a return spring (38) for displacing the piston (18) from the second switch position to the first switch position.

5. Valve (10, 10') according to any one of claims 1 to 4,
**characterised in that**
the actuator (42) can be pneumatically actuated by applying the control pressure to the control input (134).

## Revendications

1. Soupape (10, 10'), en particulier pour une suspension pneumatique (100) d'une automobile, avec un piston (18, 118) à double effet, lequel est logé dans un espace (16) de travail d'un carter (12) avec au moins deux ouvertures (26, 28, 52) de raccordement et lequel divise l'espace (16) de travail en deux espaces partiels (20, 22), moyennant quoi la première ouverture (26) de raccordement et la deuxième ouverture (28) de raccordement sont séparées de manière fluidique dans une première position de couplage du piston (18, 118) et sont couplées de manière fluidique dans une seconde position de couplage du piston (18, 118), moyennant quoi les espaces partiels (20, 22) sont reliés, indépendamment d'une position de couplage de la soupape (10, 10'), par le biais d'une conduite (24) d'équilibrage de pression dans le carter (12) et moyennant quoi la soupape (10, 10') comprend un actionneur électromagnétique (42), destiné à amener le piston (18, 118) de la première dans la seconde position de couplage,
**caractérisée en ce que**
la soupape (10, 10') comprend une entrée (134) de commande pneumatique, moyennant quoi le piston (18, 118) peut être actionné pneumatiquement, en plus, par application d'une pression de commande sur l'entrée (134) de commande.

2. Soupape (10, 10') selon la revendication 1,
**caractérisée en ce que**
la soupape (10, 10') présente une troisième ouverture (52) de raccordement, moyennant quoi la deuxième (28) et troisième ouvertures (52) de raccordement sont couplées de manière fluidique dans la première position de couplage du piston (18) et la deuxième (28) et troisième ouvertures (52) de raccordement sont séparées de manière fluidique dans la seconde position de couplage du piston (18).

3. Soupape (10, 10') selon la revendication 1 ou 2,
**caractérisée en ce que**
le piston (18) comprend une tige de piston, ainsi que deux disques (30, 43) de piston, moyennant quoi le premier disque (30) de piston présente au moins un élément (36, 56) d'étanchéité, destiné à assurer l'étanchéité du disque (30) de piston contre un siège (32, 54) de soupape.

4. Soupape (10, 10') selon l'une des revendications 1 à 3,
**caractérisée en ce que**
la soupape (10, 10') comprend un ressort (38) de rappel, destiné à amener le piston (18) de la seconde à la première position de couplage.

5. Soupape (10, 10') selon l'une des revendications 1 à 4,
**caractérisée en ce que**
l'actionneur (42) peut être actionné pneumatiquement par application de la pression de commande à l'entrée (134) de commande.
